# EUROPÄISCHE PATENTANMELDUNG

(11) **EP 1 225 496 A2**
(43) Veröffentlichungstag der Anmeldung: **24.07.2002**
(21) Anmeldenummer: 01130737.8
(22) Anmeldetag: 21.12.2001
(51) Int. Cl.: G05B 19/418

(54) **Verfahren und Vorrichtung zum Bestimmen eines kombinierten physikalisch-empirischen Prozessmodells zum Betreiben einer Anlage der Grundstoffindustrie**

(30) Priorität: 04.01.2001 DE 10100192
(71) Anmelder: SIEMENS AKTIENGESELLSCHAFT, 80333 München (DE)
(72) Erfinder: Miele, Marco, Dr., 91052 Erlangen (DE); Reinschke, Johannes, Dr., 91052 Erlangen (DE)

(57) **Zusammenfassung**

Die Erfindung betrifft ein Verfahren und eine Vorrichtung zum Bestimmen eines Prozessmodells zum Betreiben einer Anlage der Grundstoffindustrie. Ausgehend von einem physikalischen Prozessmodell und von Messgrößen wird ein kombiniertes physikalisch-empirische Prozessmodell (CPE-Modell) erstellt, welches die Anforderungen an Rechenzeit, Zuverlässigkeit sowie Glattheit der Ausgangsgrößen erfüllt.

## Beschreibung

Verfahren und Vorrichtung zum Bestimmen eines kombinierten physikalisch-empirischen Prozessmodells zum Betreiben einer Anlage der Grundstoffindustrie

Die Erfindung betrifft ein Verfahren bzw. eine Vorrichtung zum Bestimmen eines kombinierten physikalisch-empirischen Prozessmodells zum Betreiben einer Anlage der Grundstoffindustrie.

An Regelungen bzw. Steuerungen von industriellen Prozessen, insbesondere bei Anlagen der Grundstoffindustrie, wie z. B. bei Walzwerken, werden immer höhere Anforderungen gestellt. Um diese höheren Anforderungen, wie z. B. hoher Durchsatz und hohe Qualitätsanforderungen, erfüllen zu können, ist der Einsatz von komplexen Prozessmodellen zwingend notwendig. Aufgabe dieser Prozessmodelle (z. B. physikalische und/oder empirische Prozessmodelle) ist es, Prozessgrößen und/oder Prozesszustände, im Weiteren auch Modelldaten genannt, vorausschauend zu ermitteln. Physikalische Prozessmodelle sind in der Regel nichtlineare Modelle, enthalten Iterationsschleifen zur schrittweisen Annäherung an eine exakte Lösung und sind unter Umständen auf Datenpunkten, auf denen Berechnungen durchgeführt werden, nicht konvergierend.

Der Einsatz solcher Prozessmodelle ist heutzutage allgemein bekannt und üblich. Die in der Grundstoffindustrie verwendeten physikalischen Prozessmodelle sind aufgrund von rechenintensiven Vorgängen für den Online-Einsatz, d. h. für die Berechnung und Optimierung der Modelldaten während eines Produktionsablaufes, nicht geeignet.

Aufgabe der Erfindung ist es, ein Verfahren bzw. eine Vorrichtung anzugeben, das bzw. die es ermöglicht, ein kombiniertes physikalisch-empirisches Prozessmodell zu bestimmen, mit dem eine möglichst genaue Vorausberechnung und Optimierung der Modelldaten vor und während eines Produktionsablaufes gewährleistet ist und das darüber hinaus die bestehenden Anforderungen an Zuverlässigkeit, Rechenzeit (online-fähig) und Stetigkeit und/oder Differenzierbarkeit der Ausgangsgrößen erfüllt.

Die Aufgabe wird erfindungsgemäß durch ein Verfahren gemäß Anspruch 1 gelöst. Vorteilhafte Weiterbildungen des Verfahrens sind in den weiteren Ansprüchen angegeben.

Das erfindungsgemäße Verfahren nach Anspruch 1 umfasst wenigstens ein physikalisches Prozessmodell als auch Messgrößen. Dieses physikalische Prozessmodell enthält intern keine freien Parameter und ist aufgrund seiner Komplexität derart rechenintensiv, dass es für den Online-Einsatz, d. h. für die Berechnung der Modelldaten während eines Produktionsablaufes, nicht geeignet ist. Für das zu bestimmende kombinierte physikalisch-empirische Modell (CPE-Modell) wird gemäß einer bevorzugten Ausgestaltung nach Anspruch 2 eine geeignete Interpolationsfunktion und/oder Approximationsfunktion und/oder Regressionsfunktion mit zugehörigem Trainingsverfahren ausgewählt, mit der sich die Anforderungen an Rechenzeit und Glattheit des CPE-Modells erfüllen lassen. Folgende Anforderungen bzw. Eigenschaften werden an das CPE-Modell gestellt:
- Das CPE-Modell spiegelt in seinem Ein-/Ausgangsverhalten sowohl das physikalische Prozessmodell als auch empirisch bestimmte Ein- und Ausgangsgrößen (d. h. Messgrößen) wieder.
- Das CPE-Modell ist von seiner Rechenzeit her online-fähig.
- Das CPE-Modell führt eine zuverlässige Berechnung ausgehend von beliebigen Werten der Eingangsgrößen durch (vorausgesetzt der Eingangsgrößenvektor liegt in einem vorab definierten Bereich, welcher innerhalb des Gültigkeitsbereiches des physikalischen Modells beliebig gewählt werden kann).
- Das CPE-Modell besitzt vorgebbare Glattheitseigenschaften, d. h. die Ausgangsgrößen hängen mindestens stetig, wenn erforderlich auch mehrfach stetig differenzierbar, von den Eingangsgrößen ab.
- Das CPE-Modell kann optional analytisch hinterlegte (erste und gegebenenfalls höhere) partielle Ableitungen bestimmter Ausgangsgrößen nach bestimmten Eingangsgrößen ausgeben.

Im Weiteren werden für alle Eingangsgrößen des zu erstellenden CPE-Modells Gültigkeitsbereiche festgelegt (gemäß Anspruch 1, Merkmal b)). Innerhalb des jeweiligen Gültigkeitsbereiches (der Eingangsgrößen des CPE-Modells) werden feste Stützpunkte bestimmt. Die Anzahl bzw. die Dichte der Stützpunkte werden entsprechend den Genauigkeitsanforderungen an das CPE-Modell festgelegt (gemäß Anspruch 1 Merkmal c) und gemäß Anspruch 3). Auf den Stützpunkten und/oder in der Nähe derer werden mittels physikalischem Modell die Ausgangsgrößen berechnet (gemäß Anspruch 1, Merkmal d)). Die derart mit dem physikalischen Modell bestimmten Ein-/Ausgangsgrößen werden im Weiteren als Offline-Daten bezeichnet. Mit den Offline-Daten und dem Trainingsverfahren des CPE-Modells werden die Koeffizienten der Interpolationsfunktion und/oder Approximationsfunktion des CPE-Modells bestimmt (gemäß Anspruch 1 Merkmal e)). Im Weiteren wird hier von der Zwischenversion des CPE-Modells gesprochen. Mittels statistischer Untersuchungen werden die Abweichungen zwischen dem physikalischen Modell und der Zwischenversion des CPE-Modells analysiert (gemäß Anspruch 1 Merkmal f)). Bei zu hohen Abweichungen, d. h. wenn die Genauigkeitsvorgaben vom CPE-Modell nicht erreicht werden, werden folgende Schritte erneut durchgeführt (gemäß einer vorteilhaften Ausgestaltung nach Anspruch 3 und 4) :
- Neufestlegung der festen Stützpunkte innerhalb des Gültigkeitsbereiches der Eingangsgrößen des CPE-Modells.
- Neuberechnung der Ausgangsgrößen auf den festen Stützpunkten und/oder in der Nähe derer mittels physikalischem Modell.
- Neuberechnung der Koeffizienten des CPE-Modells mittels ausgewähltem Trainingsverfahren.
- Neuquantifizierung der Abweichungen zwischen dem physikalischen Modell und der Zwischenversion des CPE-Modells mittels statistischer Untersuchungen.

Diese Schritte werden so lange wiederholt, bis die geforderten Genauigkeitswerte des CPE-Modells erreicht werden. Anschließend werden Eingangs- und Ausgangsgrößen gemessen (auch gemessene Daten genannt) und Eingangs- und Ausgangsgrößen mit der zuvor erstellten Zwischenversion des CPE-Modells berechnet, welche auch Zwischenversionsdaten genannt werden (gemäß Anspruch 1 Merkmal g)). Modelldaten des physikalischen Prozessmodells und/oder gemessene Daten und/oder gegebenenfalls die Zwischenversionsdaten werden zu einem neuen Satz von Eingangs- und/oder Ausgangsgrößen verarbeitet, welche auch als abgeglichene Daten bezeichnet werden. Mit den abgeglichenen Daten wird die Interpolationsfunktion und/oder Approximationsfunktion und/oder Regressionsfunktion des ausgewählten CPE-Modells erneut trainiert und das endgültige CPE-Modell erstellt (gemäß Anspruch 1 Merkmal h) und den vorteilhaften Ausgestaltungen nach Anspruch 5, 6 und 7).

Die erfindungsgemäße Vorrichtung nach Anspruch 8 umfasst ein Rechensystem einer Anlage der Grundstoffindustrie, mit dem zur Bestimmung eines CPE-Modells folgende Schritte durchgeführt werden:
a) Auswahl einer Rechenfunktion, welche die Anforderungen an Rechenzeit (online-fähig) und Stetigkeit und/oder Differenzierbarkeit erfüllt.
b) Bestimmen der Gültigkeitsbereiche der Eingangsgrößen.
c) Bestimmen von festen Stützpunkten innerhalb der Gültigkeitsbereiche.
d) Berechnen von Ausgangsgrößen auf den und/oder in der Nähe der festen Stützpunkte mittels physikalischem Modell.
e) Berechnen der Koeffizienten des CPE-Modells (Zwischenversion).
f) Statistische Untersuchung bezüglich Abweichungen zwischen dem CPE-Modell (Zwischenversion) und dem physikalischen Modell.
g) Statistische Untersuchung bezüglich Abweichungen zwischen dem CPE-Modell (Zwischenversion) und gemessenen Eingangsund Ausgangsgrößen.
h) Erstellen des CPE-Modells (Endversion) in Abhängigkeit der statistischen Untersuchungen.

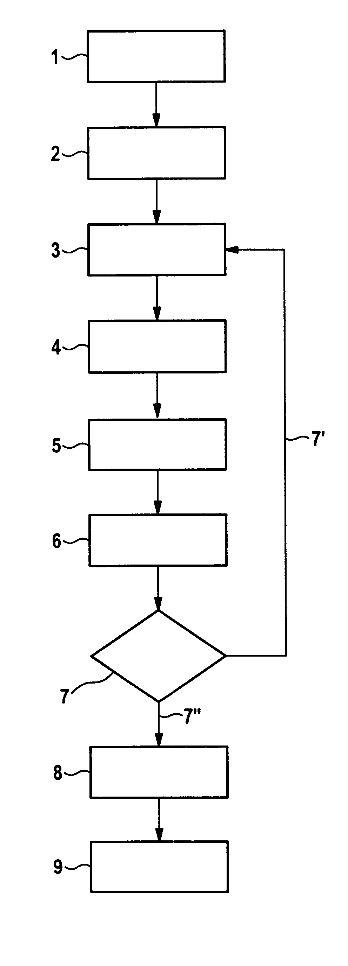

Die Erfindung sowie weitere Vorteile und Details werden im Folgenden anhand von einem schematisch dargestellten Ausführungsbeispiel in der Zeichnung näher erläutert. Die einzige Figur zeigt ein Beispiel für die erfindungsgemäße Ausführung zur Bestimmung eines CPE-Modells.

Das Ausführungsbeispiel zeigt das erfindungsgemäße Verfahren zur Bestimmung eines kombinierten physikalisch-empirischen Prozessmodells (CPE-Modell) zum Betreiben einer Anlage der Grundstoffindustrie. Das zur Bestimmung eines solchen Prozessmodells verwendete Verfahren wird anhand der Verfahrensschritte 1 bis 9 näher erläutert.

### Verfahrensschritt 1:

Auswahl einer Interpolationsfunktion und/oder Approximationsfunktion und/oder Regressionsfunktion, die auch z. B. in Form von neuronalen Netzen oder Stützvektormaschinen realisiert werden, mit zugehörigem Trainingsverfahren basierend auf einem physikalischen Prozessmodell als auch auf Messgrößen. Das erstellte CPE-Modell weist folgenden Eigenschaften auf:
- Das CPE-Modell spiegelt in seinem Ein-/Ausgangsverhalten sowohl das physikalische Prozessmodell als auch empirisch bestimmte Ein- und Ausgangsgrößen (d. h. Messgrößen) wieder.
- Das CPE-Modell ist von seiner Rechenzeit her online-fähig.
- Das CPE-Modell führt eine zuverlässige Berechnung ausgehend von beliebigen Werten der Eingangsgrößen durch (vorausgesetzt der Eingangsgrößenvektor liegt in einem vorab definierten Bereich, welcher innerhalb des Gültigkeitsbereiches des physikalischen Modells beliebig gewählt werden kann).
- Das CPE-Modell besitzt vorgebbare Glattheitseigenschaften, d. h. die Ausgangsgrößen hängen mindestens stetig, wenn erforderlich auch mehrfach stetig differenzierbar, von den Eingangsgrößen ab.
- Das CPE-Modell kann optional analytisch hinterlegte (erste und gegebenenfalls höhere) partielle Ableitungen bestimmter Ausgangsgrößen nach bestimmten Eingangsgrößen ausgeben.

### Verfahrensschritt 2:

Festlegung der Gültigkeitsbereiches für eine vorgebbare Anzahl von Eingangsgrößen des CPE-Modells.

### Verfahrensschritt 3:

Bestimmung von festen Stützpunkten im Gültigkeitsbereich der Eingangsgrößen. Die Anzahl bzw. die Dichte der Stützpunkte im Gültigkeitsbereich der Eingangsgrößen werden in Abhängigkeit der Genauigkeitsanforderungen an das CPE-Modell bestimmt.

### Verfahrensschritt 4:

Berechnen der Ausgangsgrößen auf den festen Stützpunkten und/oder in der Nähe derer mit dem physikalischem Modell. Diese Daten werden im Weiteren als Offline-Daten bezeichnet.

### Verfahrensschritt 5:

Trainieren des CPE-Modells mit den Offline-Daten. Hier werden die Koeffizienten der Interpolationsfunktion und/oder Approximationsfunktion des CPE-Modells mittels Trainingsverfahren bestimmt, und ein CPE-Zwischenmodell erstellt.

### Verfahrensschritt 6:

Statistische Untersuchung der Abweichung des CPE-Zwischenmodells vom physikalischen Modell (Genauigkeitsuntersuchung).

### Verfahrensschritt 7:

In diesem Verfahrensschritt erfolgt eine Genauigkeitsauswertung. Wird eine zu hohe Abweichung zwischen dem physikalischen Modell und dem CPE-Zwischenmodell festgestellt, erfolgt ein Rücksprung 7' zu Verfahrensschritt 3. D. h., die Verfahrensschritte 3, 4, 5 und 6 werden erneut durchgeführt und so lange wiederholt, bis die ermittelte Abweichung zwischen den beiden Modellen eine festgelegte Toleranz nicht überschreitet. Befinden sich die Modelldaten der beiden Modelle innerhalb des festgelegten Toleranzbereiches, so wird über 7'' der nächste Verfahrensschritt eingeleitet.

### Verfahrensschritt 8:

Dieser Verfahrensschritt besteht im Wesentlichen aus drei Teilschritten:
- Messen von Eingangs- und Ausgangsgrößen (Messgrößen)
- Berechnung von Eingangs- und Ausgangsgrößen mit dem CPE-Zwischenmodell (Zwischenversionsdaten)
- Verarbeitung von Modelldaten des physikalischen Prozessmodells, Messdaten und Zwischenversionsdaten zu sogenannten abgeglichenen Daten.

### Verfahrensschritt 9:

Nach dem Optimieren des CPE-Modells mit den abgeglichenen Daten erhält man das endgültige CPE-Modell.

## Patentansprüche

1. Ein Verfahren zur Bestimmung eines kombinierten physikalisch-empirischen Prozessmodells (CPE-Modell), welches sowohl auf einem physikalischen Prozessmodell als auch auf Messgrößen beruht, zum Betreiben einer Anlage der Grundstoffindustrie, wobei im laufenden Betrieb der Anlage Modelldaten mit dem CPE-Modell derart vorbestimmt und/oder nachberechnet werden, dass die Anforderungen an die Qualität der erzeugten Produkte möglichst schnell und exakt erreicht werden, mit folgenden Verfahrensschritten:
a) Auswahl einer Rechenfunktion, welche die Anforderungen an Rechenzeit (online-fähig) und Stetigkeit und/oder Differenzierbarkeit erfüllt.
b) Bestimmen der Gültigkeitsbereiche der Eingangsgrößen.
c) Bestimmen von festen Stützpunkten innerhalb der Gültigkeitsbereiche.
d) Berechnen von Ausgangsgrößen auf den festen Stützpunkten und/oder in der Nähe derer mittels physikalischem Modell.
e) Berechnen der Koeffizienten des CPE-Modells (Zwischenversion).
f) Statistische Untersuchung bezüglich Abweichungen zwischen dem CPE-Modell (Zwischenversion) und dem physikalischen Modell.
g) Statistische Untersuchung bezüglich Abweichungen zwischen dem CPE-Modell (Zwischenversion) und gemessenen Eingangsund Ausgangsgrößen.
h) Erstellen des CPE-Modells (Endversion) in Abhängigkeit der statistischen Untersuchungen.

2. Verfahren nach Anspruch 1,
**dadurch gekennzeichnet,**
**dass** das CPE-Modell aus Interpolationsfunktionen und/oder Approximationsfunktionen und/oder Regressionsfunktionen, die auch z. B. in Form von neuronalen Netzen oder Stützvektormaschinen realisiert werden, mit zugehörigen Trainingsverfahren bestimmt wird, welche die Anforderungen an Rechenzeit (d. h. online-fähig) und Stetigkeit und/oder Differenzierbarkeit der Ausgangsgrößen erfüllen.

3. Verfahren nach Anspruch 1,
**dadurch gekennzeichnet,**
**dass** die festen Stützpunkte abhängig von Genauigkeitsanforderungen, d. h. in Abhängigkeit der zulässigen Abweichungen zwischen dem CPE-Modell und dem physikalischen Modell, bestimmt werden.

4. Verfahren nach Anspruch 1
**dadurch gekennzeichnet,**
**dass** in Abhängigkeit der statistischen Untersuchung bezüglich Abweichungen zwischen dem CPE-Modell und dem physikalischen Modell eine Neufestlegung von festen Stützpunkten erfolgt und die Verfahrenschritte d) - f) erneut durchgeführt werden.

5. Verfahren nach Anspruch 1,
**dadurch gekennzeichnet,**
**dass** in Abhängigkeit der statistischen Untersuchung bezüglich Abweichungen zwischen dem CPE-Modell und gemessenen Eingangsund Ausgangsgrößen, das CPE-Modell optimiert wird.

6. Verfahren nach Anspruch 1 oder 5,
**dadurch gekennzeichnet,**
**dass** das CPE-Modell mit berechneten Daten des physikalischen Modells bestimmt wird.

7. Verfahren nach Anspruch 1, 5 oder 6,
**dadurch gekennzeichnet,**
**dass** das CPE-Modell mit berechneten Daten des physikalischen Modells und mit gemessenen Eingangs- und Ausgangsgrößen bestimmt wird.

8. Vorrichtung zur Bestimmung eines kombinierten physikalisch-empirischen Prozessmodells (CPE-Modell), welches sowohl auf einem physikalischen Prozessmodell als auch auf Messgrößen beruht, zum Betreiben einer Anlage der Grundstoffindustrie, wobei im laufenden Betrieb der Anlage Modelldaten mit dem CPE-Modell derart vorbestimmt und/oder nachberechnet werden, dass die Anforderungen an die Qualität der erzeugten Produkte möglichst schnell und exakt erreicht werden, wobei mit einem Rechensystem folgende Schritte ausführbar sind:
a) Auswahl einer Rechenfunktion, welche die Anforderungen an Rechenzeit (online-fähig) und Stetigkeit und/oder Differenzierbarkeit erfüllt.
b) Bestimmen der Gültigkeitsbereiche der Eingangsgrößen.
c) Bestimmen von festen Stützpunkten innerhalb der Gültigkeitsbereiche.
d) Berechnen von Ausgangsgrößen auf den festen Stützpunkten und/oder in der Nähe derer mittels physikalischem Modell.
e) Berechnen der Koeffizienten des CPE-Modells (Zwischenversion).
f) Statistische Untersuchung bezüglich Abweichungen zwischen dem CPE-Modell (Zwischenversion) und dem physikalischen Modell.
g) Statistische Untersuchung bezüglich Abweichungen zwischen dem CPE-Modell (Zwischenversion) und gemessenen Eingangsund Ausgangsgrößen.
h) Erstellen des CPE-Modells (Endversion) in Abhängigkeit der statistischen Untersuchungen.

9. Kombiniertes physikalisch-empirisches Prozessmodell (CPE-Modell) zum Betreiben einer Anlage der Grundstoffindustrie mit folgenden Eigenschaften:
a) Das CPE-Modell spiegelt in seinem Ein-/Ausgangsverhalten sowohl das physikalische Prozessmodell als auch empirisch bestimmte Ein- und Ausgangsgrößen (d. h. Messgrößen) wieder.
b) Das CPE-Modell ist von seiner Rechenzeit her online-fähig.
c) Das CPE-Modell führt eine zuverlässige Berechnung ausgehend von beliebigen Werten der Eingangsgrößen durch (vorausgesetzt der Eingangsgrößenvektor liegt in einem vorab definierten Bereich, welcher innerhalb des Gültigkeitsbereiches des physikalischen Modells beliebig gewählt werden kann).
d) Das CPE-Modell besitzt vorgebbare Glattheitseigenschaften, d. h. die Ausgangsgrößen hängen mindestens stetig, wenn erforderlich auch mehrfach stetig differenzierbar, von den Eingangsgrößen ab.
e) Das CPE-Modell kann optional analytisch hinterlegte (erste und gegebenenfalls höhere) partielle Ableitungen bestimmter Ausgangsgrößen nach bestimmten Eingangsgrößen ausgeben.

10. CPE-Modell nach Anspruch 9,
**dadurch gekennzeichnet,**
**dass** das CPE-Modell analytisch hinterlegte (erste und gegebenenfalls höhere) partielle Ableitungen bestimmter Ausgangsgrößen nach bestimmten Eingangsgrößen ausgibt.
